# EUROPEAN PATENT SPECIFICATION

(11) **EP 3 145 117 B1**
(45) Date of publication and mention of the grant of the patent: **12.02.2020**
(21) Application number: 16185884.0
(22) Date of filing: 26.08.2016
(51) Int. Cl.: H04L 9/32, H04L 29/06

(54) **A METHOD AND A SYSTEM FOR SHARED DIGITAL SIGNING OF A DOCUMENT**
VERFAHREN UND SYSTEM ZUR GEMEINSAMEN DIGITALEN SIGNIERUNG EINES DOKUMENTS
PROCÉDÉ ET SYSTÈME DE SIGNATURE NUMÉRIQUE PARTAGÉE D'UN DOCUMENT

(30) Priority: 18.09.2015 IT UB20153743
(43) Date of publication of application: 22.03.2017
(73) Proprietor: Campanini, Fabrizio, 40066 Pieve di Cento (Bologna) (IT); Pastore, Giuseppe, 44124 Ferrara (IT)
(72) Inventor: Campanini, Fabrizio, 40066 Pieve di Cento (Bologna) (IT); Pastore, Giuseppe, 44124 Ferrara (IT)
(74) Representative: Milli, Simone

(56) References cited:
- WO-A1-01/13574
- WO-A2-01/41354
- US-A1- 2014 379 585

## Description

This invention relates to a method and a system for shared digital signing by a plurality of persons of a document (electronic document).

As is known, the need is particularly perceived to be able to digitally sign an electronic document (i.e. a file of any type), such as for example a contract or delivery receipt for a hard copy document, so that the (digital) signature appended by one or more persons has a legally recognised value.

In this context, various solutions are known, which enable certifying the signature appended by the user on a determined digital document.

For example, in Italy, there exists a national services charter (CNS) which is issued by an authorised authority and which allows digital signing of a document.

In greater detail, this system of digitally signing can be made up of:
- a secure device for writing signatures ("smart card")
- a "smart card" reader;
- a signature and verification software program,
or alternatively a USB device with the signature and verification program on board.

Other examples are known in WO01/41354, that discloses a digital signature service that integrates digital signature functions on data, for storage in a database, and in WO01/13574 that disdoses a digital signature service that generates digital signatures for documents independent of the program used to transmit the documents.

The signature and verification program is generally installed on an electronic device (for example a PC or another electronic device) and enables selecting the electronic document to be submitted for digital signing and, following activation of a further function, to time marking.

At the time of signing the document, the signature and verification program requests entering of protection codes of the device (PIN) and - if correctly entered - will proceed with the creation of the digitally signed file.

The signed file is given the extension .p7m which will be added to the extension of the original file.

It should be noted that this system includes having available a smart card reader, which is usually connected to a personal computer (desktop or portable).

It should be noted that the electronic document to be submitted for digital signing is signed, in this way, by one person only; if there is a need to have the document signed by a plurality of persons, it is necessary to share it on completion of each signature (which is obviously very complicated and onerous for the users).

A particularly perceived need, in particular for certain users having the need to certify a document in different places from the office (for example in worksites), is to have available a shared digital signature system (i.e. which enables signing of a document by a plurality of persons) that is particularly simple, which can be based on a rather simple hardware which does not require the presence of *smart card* readers and PCs or USB devices.

A further need is to have a digital signature system that is particular reliable and safe.

The aim of this invention is to satisfy the above-mentioned needs, in particular to provide a system and a method for digital signing of a document that is particularly simple, rapid and reliable.

According to the invention, this aim is achieved by a system and a method for digitally signing a document comprising the technical features described in one or more of the appended claims.

The technical features of the invention, according to the above aims, are clearly described in the claims below and its advantages are apparent from the detailed description which follows, with reference to the accompanying drawings which illustrate a non-limiting example embodiment of the invention and in which:

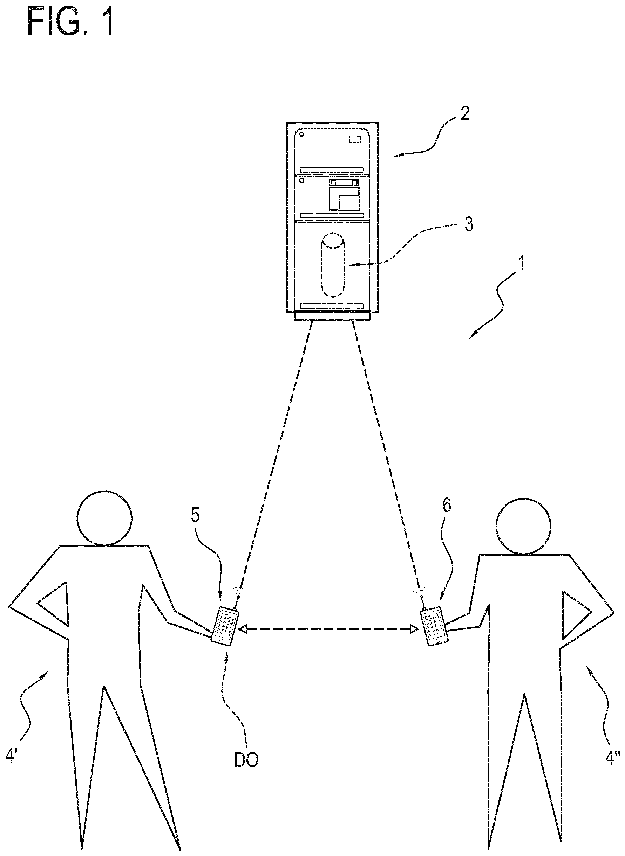

- Figure 1 is a schematic view of the system for digital signing of the invention;
- Figure 2 is a schematic view of the steps of a digital signing process.

In conformity with the appended drawings, reference numeral 1 denotes the digital signature that is the object of the invention.

The invention relates to a method for digitally signing (in a shared manner) a digital document (electronic) by a plurality of users (4', 4"), i.e. by more than two persons (in general any number of persons).

It should be noted that the expression "digital document" or "electronic document" are intended to mean any electronic file (an image, a video, a file containing words, images, etc.).

This expression is also intended to mean pre-compiled files, which the user fills in by entering graphic and/or alphanumeric information in one or more specially predisposed fields.

The method for digitally signing a digital document by a plurality of users (4', 4") comprises following steps:
- A) preparing a remote processor 2 provided with a database 3 containing authentication information associated with users 4', 4" of the service;
- B) associating a first mobile electronic device 5 to a first user 4' by storing identification information of the first electronic device 5 in the database 3 and storing association information regarding an association (established) between the first mobile electronic device 5 and the first user 4';
- C) associating a second mobile electronic device 6 to a second user 4" by storing identification information of the second electronic device 6 in the database 3 and storing association information regarding an association between the second mobile electronic device 6 and the second user 4";
- D) preparing a digital document DO which must be digitally signed and displaying the digital document DO in a display of the first mobile electronic device 5;
- E) starting a session for digitally signing the digital document DO comprising the following steps:
- F) electronically transmitting first identification information of the first electronic device 5 from the first electronic device 5 to the remote processor 2;
- G) checking the identity of the first user 4' on the basis of the first identification information, by interrogating the database 3;
- H) electronically transmitting from the first mobile electronic device 5 to the second mobile electronic device 6 information designed to allow a display of the digital document D on the second mobile electronic device 6;
- L) electronically transmitting second identification information of the second electronic device 6 from the second electronic device 6 to the remote processor 2;
- M) checking the identity of the second user 4", on the basis of the second identification information, by interrogating the database 3;
- N) electronically sending, in the case of a positive outcome of the identity checks, a notification of signature by the second user 4" to the first electronic device 5 so as to complete the digital signing of the electronic document DO by the first and the second user 4', 4". It should be noted that step H) of electronically transmitting from the first mobile electronic device 5 to the second mobile electronic device 6 information designed to allow a display of the digital document DO on the second mobile electronic device 6 further comprises a step of sending a request for signing of the digital document DO by the second user 4".

It should further be noted that the method, following the completion of the digital signature of the electronic document DO by the first and second user 4', 4", also includes attaching to the electronic document DO one or more images representing a signature placed by the first and second user 4', 4".

The images representing a signature carried out by the first and second user 4', 4" are preferably stored in the data base 3.

It should be noted that, according to this aspect, on completion of the digital signing procedure, the users can advantageously for example print a document in which images representing a signature made by the first and the second user 4', 4" are present.

The user 4', 4" preferably stores the image representing her/his personal digital signature during the registration step.

It should be noted that in a further aspect the method, following the completion of the digital signature of the electronic document DO by the first and second user 4', 4", also includes attaching to the electronic document DO one or more images and/or alphanumeric data representing a completion of the signing process (for example a logo certifying that the signing process has been completed, or information representing the date/time in which the digital signature and/or the unique alphanumerical information of the signature completed procedure were completed). It should be noted that the above-described method has been described with reference to the signing of a digital document DO by two users, a first user 4' and a second user 4": in general the method is applicable for the digital signing of a digital document DO by any number of users, as what has been described with reference to the second mobile device 6 and the second user 4" can be applicable also to further users who must sign the document (in the same signing session).

Some of the steps mentioned in the foregoing will now be more fully described.

With reference to the mobile electronic device (first or second), note that it is preferably a mobile telephone or a tablet, or a hand-held device or a portable computer (more in general a smartphone device).

The expression "mobile electronic device" should be taken to mean a portable device, i.e. transportable by the user.

The mobile electronic device is preferably able to function with a battery i.e. in the absence of an electrical grid.

The mobile electronic device is preferably provided with a display screen and an interface for sending commands by the user (a screen of the "touch-screen" type, with buttons, etc.).

More preferably, the first mobile device 5 and the second mobile device 6 are elements of the following group: mobile phones, tablets, portable computers, handheld devices, smartphones.

The mobile electronic device is configured for connecting to a mobile telephone network, in order to accede to the internet.

It should be noted that according to this aspect, the mobile electronic device is advantageously provided with a SIM card and a data transmission and receiving card, configured for connecting to the mobile telephone network so as to enable data transmission and reception (in particular towards and from the internet).

Still more preferably, the mobile electronic device is provided with a wireless communication card (Wi-Fi), configured so as to enable receiving of data and transmission of data via an internet network.

With reference to step A), note that the database 3 is preferably a part of the remote processor 2, i.e. it is housed in an area of the memory thereof. It should be noted that the remote processor 2 is provided with an electronic unit (processor) for data processing.

Further, the remote processor 2 is connected to the internet.

With reference to steps B) and C), the following is observed.

Preferably, the step C) of associating a first mobile electronic device 5 with a first user 4' by storing identification information of the first electronic device 5 in the database 3 preferably comprises a step of storing in the database 3 information regarding the IMEI code and/or serial number of the first electronic device 5 and/or information regarding the MAC address of the network card of the first mobile electronic device 5.

It should be noted that this identification information of the first electronic device 5 is substantially unique information relating to the first electronic device 5, designed to enable unique identification of the electronic device 5.

This identification information is stored in the database 3, together with an association with a user (identified for example by means of personal identification details).

It should be noted that the database 3 preferably also contains information (personal details) identifying the user associated to the mobile device (for example one or more from among the following: name, surname, tax code, identification data of identifying documents, date of birth, residential address, etc.).

The step C) of associating a second mobile electronic device 6 with a second user 4" by storing identification information of the second electronic device 6 in the database 3 preferably comprises a step of storing in the database 3 information regarding the IMEI code and/or serial number of the second electronic device 6 and/or information regarding the MAC address of the network card of the second mobile electronic device 6.

According to a further aspect, the step D) of preparing a digital document DO to be digitally signed comprises a step capturing a photograph of a hard copy document using the first mobile electronic device 5, for electronically generating the above-mentioned digital document DO.

In other words, according to this aspect, a photograph (electronic i.e. in digital form) is acquired of a hard copy document.

In this way, it is advantageously possible to digitally sign for example the minutes of a meeting or an inspection (possibly written by hand): in fact, after having drawn up the document, a photograph is taken in digital format so as to be able to have a digital copy i.e. digitalised of the actual document.

It should be noted that more generally it is also possible to predispose the electronic document DO by means of a direct writing of the electronic document DO, a dictation with applications or in any other form suitable for enabling a completion of an electronic file in any format.

According to this aspect, the method further comprises a step of selecting the second user, to which the second electronic device corresponds, by using the first electronic device 5, before the step H) of electronically transmitting from the first mobile electronic device 5 to the second mobile electronic device 6 information designed to allow a display of the digital document DO on the second mobile electronic device 6.

It should be noted that in this way the first user 4' can advantageously directly select the user (or users) who will have to digitally sign the document, i.e. the user to whom the document will be transmitted for the digital signature.

With reference to the step H) of electronically transmitting from the first mobile electronic device 5 to the second mobile electronic device 6 information designed to allow a display of the digital document DO on the second mobile electronic device 6, the following is observed.

Preferably the transmission from the first mobile electronic device 5 to the second mobile electronic device 6 of information designed to allow a visual display of the digital document DO is a "peer to peer" type transmission, i.e. a direct transmission between the mobile electronic devices (5, 6) (preferably carried out via an internet network).

It should be noted that, with reference to this transmission, preferably digital data is transmitted that is designed to enable reconstruction of the display of the digital document DO on the second mobile electronic device 6.

Preferably, in another aspect of the method, the first user 4' selects the second user 4" (by means of the first mobile device 5) by selection from an address book, i.e. a list.

In practice, according to the method, a list of users is displayed on the first mobile device 5 (i.e. on a display screen that is a part of the first mobile device 5) and selection is made of one or more of the users displayed for the digital signature.

If the users have not already registered for the service, it is possible, via sms text message, email or any other way, to send the users a notification to download an application onto their mobile device, so as to be able to register for the service and obtain the software necessary for completion of the digital signature method.

According to a still further aspect, the step F) of transmitting first identification information of the first electronic device 5 from the first electronic device 5 to the remote processor 2 comprises a step of transmitting the IMEI code and/or the serial number of the first electronic device 5 and/or a MAC address of the network card and/or information regarding the GPS position and/or information regarding a unique identification key ("user key") of the first electronic device 5, that is, belonging to the first user 4').

It should be noted that in this way security identification of the mobile electronic device is safely guaranteed, and consequently identification also of the user to whom the mobile electronic device is associated in the database 3.

According to a further aspect, the step of transmitting second identification information of the second electronic device 6 from the second electronic device 6 to the remote processor 2 comprises a step of transmitting the IMEI code and/or the serial number of the second electronic device 6 and/or a MAC address of the network card and/or information regarding the GPS position and/or information regarding a unique identification key ("user key") of the second electronic device 6, that is, belonging to the second user 4".

According to a further aspect, the step E) of starting a session for digitally signing the digital document (DO) comprises a step of transmitting to the remote processor 2 check data designed to allow the checking of the identity of a software application present in the first and second mobile device 5, 6 by the first electronic device 5 and by the second mobile electronic device 6 and a step of authenticating the check data, using the remote processor 2.

According to this aspect, the method comprises a step of halting the digital signature step, so as to prevent completion of the digital signing procedure, as a function of the outcomes of the identity verifications made by the software application (installed in the mobile device/s).

More precisely, the method comprises a step of halting the digital signature step, so as to prevent completion of the digital signing procedure, as a function of the outcomes of the authentication, via the remote processor 2, of the check data.

More precisely, if the outcome of the step of authenticating done by means of the remote processor 2 of the check data were to ascertain that the software application was not authentic (i.e. original), the method provides to halt the digital signature step.

This aspect enables avoiding digital fraud, in particular it enables preventing the non-authentic software from becoming activated or completing a digital signing procedure (thus increasing the security, that is, the reliability of the final method).

It should be noted that, in greater detail, the step of authenticating the check data, via the remote processor 2, comprises a step of comparing the check data with stored data.

More in general, it should be noted that the digital signing method enables digitally signing a document by two or more users: one of the users activates the signing process, according to what is described in the foregoing with reference to the first user 4'.

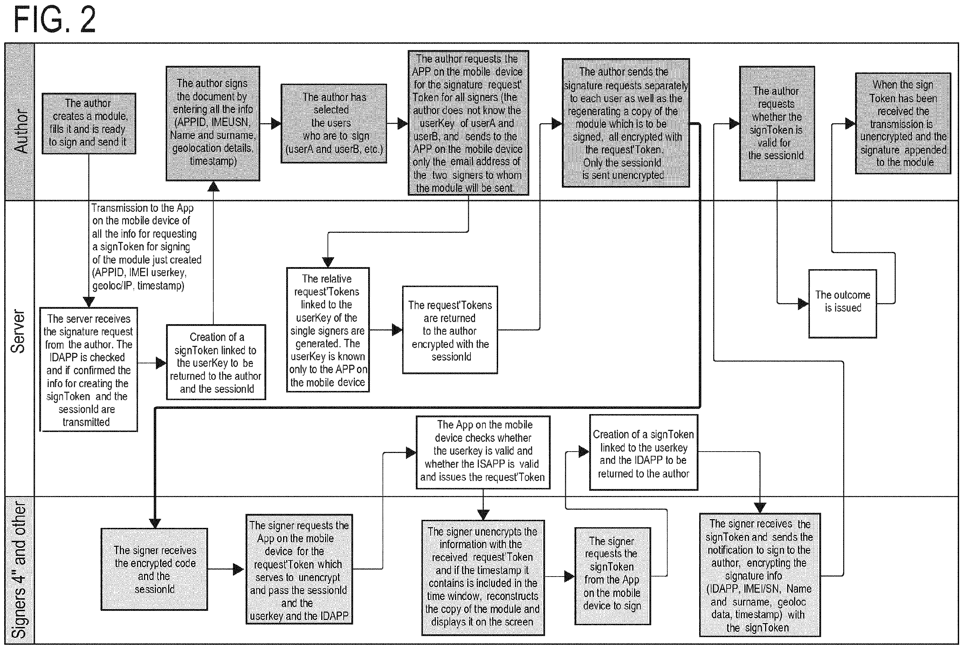

The digital signing of a document DO by two users will now be described, respectively a first user 4' and a second user 4" (with reference in particular to the flow chart illustrated in figure 2).

According to the method, the first electronic device 5 is associated to the first user 4' and the second electronic device 6 to the second user 4".

The above-mentioned association is established by effect of the registration, following which a memorisation is made in the database 3 of identification information of the first and second electronic device (for example IMEI code or serial address of the device, MAC address of the network card, etc., identification code of a software module resident in the device).

The registration obviously includes acceptance of contractual conditions relative to the provision of the service.

Further, a software module is also to be installed (operating instructions) on the first mobile electronic device and the second mobile electronic device (on the second electronic device the software module can also be installed following receipt of a request to sign).

According to an aspect, the software module (operating instructions) is provided with a unique identification code ("id app").

The unique identification code ("id app") is preferably issued directly during the step of downloading the software module onto the mobile electronic devices 5,6.

It should be noted that preferably the unique identification code is stored in the database 3, that is, it is a part of the identification information of the relative electronic device.

The first user 4' transmits a request for signature to the server: this is done by a transmission of information from the first mobile device 5 to the remote processor 2.

It should be noted that in this step identification information of the first mobile device 5 is transmitted, for example one or more of the following information: the IMEI code, a so-termed *"user key",* information relating to geolocation, items of information relating to the precise time *("time stamp"*), the unique code of the software module resident in the mobile device (*"id app"*).

The remote processor 2, on receiving the above-mentioned identification information, proceeds to an identity verification of the first user 4', by comparing some or all of this information with corresponding items of information stored in the database 3.

For example, the remote processor checks that the IMEI code transmitted, unique among the mobile electronic devices, corresponds to the IMEI code stored for the user to which the *"user key"* is associated (the *"user key*" is a unique identification code of the user.

Further, for example, the remote processor checks that the unique code of the software module transmitted *("id app")* corresponds to the code stored for the user.

At this point, the remote processor 2 issues a token for the signature (linked to the *"user key",* termed the *"sign token"*) by the first user 4', having a prefixed time validity and transmits the *"sign token"* for the signature to the first electronic device 5.

It should be noted that the transmission of data from the remote processor 2 to the first or second device 5, 6, or vice versa, preferably occur via a wireless network, preferably via a wireless internet connection.

Further, the remote processor 2 transmits a session token (*"session id*") to the first electronic device 5, which represents an identification code of the signing procedure sent to the first user 4'.

These tokens (for the signature - *sign token"* - and *"session id"*) have the aim of preventing digital attacks by hackers.

In fact, in particular, the limited time validity, in particular of the *"sign token"* is such that upon an attack by a hacker the *"sign token"* cannot be re-utilised after the predetermined time (normally in the order of few tens of seconds, for example 20 seconds).

The first user 4' proceeds to digitally sign the digital document DO, imparting an appropriate command on the first digital device 5.

The first user 4' selects - via the first digital device 5 (i.e. via an interface of the first digital device 5) - the users (in this case the second user 4") who will have to digitally sign the digital document DO.

The first user 4' preferably selects the users (in this case the second user 4") who will have to digitally sign the document DO through an address book (which is a part of the first digital device 5, integrated or not in the application relative to the signing service installed on the first digital device 5).

If the selected user is not subscribed to the service, that user is sent, via sms text message / email or another service, a notification for subscription to the service, being an invitation to install the application on his/her mobile device, necessary in order to be enabled to use the service. On receiving this request, the remote processor 2 generates further tokens (*"request tokens"*) associated to the *"user key*" of the users (in this case the second user 4") who must digitally sign the document.

It should be noted that, advantageously, the first user 4' does not know the *"user key*" of the other users (in this case the second user 4") who will have to digitally sign the document. In this way, the security of the system, i.e. the digital signing method, is particularly high.

At this point, the remote processor 2 transmits the *"request tokens"* generated to the first electronic device 5.

It should be noted that preferably the remote processor 2 transmits the *"request tokens"* generated to the first electronic device 5 after the *"request tokens"* have been encrypted on the basis of the *"session id'* parameter (this parameter is the identification of the signing session under way).

Therefore the first user 4' receives the *"request tokens"* associated to the other users, appropriately encrypted.

The first device 5 transmits, to the users who will have to sign (in this case the second user i.e. the second electronic device 6), a request for signing (this request contains the *"session id"*).

Further, the first device 5 transmits, to the users who will have to sign (in this case the second user 4") information designed to enable a reconstruction of the digital document DO.

It should be noted that this transmission is a "peer to peer" transmission between the devices, i.e. a transmission that does not include a passage through the remote processor 2.

The first device 5 preferably carries out an encryption of the information enabling a reconstruction of the digital document DO on the basis of the *"request tokens"* received and associated to the user to whom the digital document DO will be transmitted.

Preferably, only the *"session id'* is transmitted unencrypted.

In extreme summary, the second electronic device 6 receives, from the first electronic device 5, the digital document DO and the *"session id'.* The second electronic device 6 transmits to the remote processor 2 a request for receiving the *"request token"* associated thereto.

The second electronic device 6 preferably transmits to the remote processor 2 information inherent to the *"user key"* of the second electronic device 6 the *"session id'* and the unique identification code of the software module (*"id app"*).

The remote processor 2 carries out a verification relating to whether the user who has transmitted the request (second user 4") is involved or not in the established signature procedure (procedure identified with *"session id"*) or whether it is one of the users who is to sign the digital document DO.

If the outcome of this check is positive, the remote processor 2 transmits to the second electronic device 6 the *"request token"* associated to the second electronic device 6.

This check is preferably carried out on the basis of the *"user key*" of the second user and on the basis of the unique identification code of the software module *("id app").*

Further, it should therefore be noted that following the positive outcome of the check, the second electronic device 6 receives from the remote processor 2 the *"request token"* associated thereto.

This *"request token"* parameter is used by the second electronic device 6 together with the *"session id'* and the *"user key*" for unencrypting the items of information received (in particular the information designed to enable generation of the displaying of the digital document DO by the second electronic device 6).

It should be noted that the second electronic device 6, on the basis of the *"request token",* unencrypts the contents received from the first electronic device 5.

In particular, preferably a verification step is included of the validity of the *"time stamp":* if the time validity of this parameter has not lapsed, the unencrypting operation is triggered.

This constitutes a further digital security against potential hacker attacks.

At this point, the second electronic device 6 preferably transmits to the remote processor 2 a request for authorisation to sign, transmitting the *"user key*" to the second user 4" and possibly also the unique identification code of the software module *("id app")* associated to the electronic device 6 of the second user 4".

On receiving this request, the remote processor 2 generates a *"sign token"* to be used to carry out the digital signature on the basis of the *"user key*" associated to the second user 4" and preferably also on the basis of the unique identification code of the software module *("id app")* associated to the electronic device 6 of the second user 4".

The remote processor 2 transmits the *"sign token"* to the second mobile device 6, so as to enable second user 4" to digitally sign the document DO.

At this point, the second electronic device 6 transmits a digital signature notification to the first electronic device 5.

This digital signature notification preferably comprises encrypted data (for example the IMEI/SN code, the name and surname, items of information relating to a geolocation, the *"sign token",* the unique identification code of the software module *"id app"*).

It should be noted that the first mobile device 5 is now in the possession of the *"sign token"* of the second device 6.

The first electronic device 5 verifies whether the *"sign token"* received from the second device 6 is valid or not for the signing session under way (identified on the basis of the "session id"): this check is done by mean of an exchange of data with the remote processor 2.

If the outcome of the verification is positive, the signature of the second user 4" will then be applied on the digital document DO.

Further, preferably, if the outcome of the verification is positive, an image will be graphically applied on the document DO, representing the signature of the second user 4" on the digital document DO (the image relative to the signature of the first user 4' can be applied on the digital document DO at the same time, previously or subsequently).

Further, preferably if the outcome of the verification is positive, an image will be graphically applied on the document DO, representing the conclusion of the digital signature procedure established.

Therefore the first mobile device 5 provides to apply the signature of the second user 4" on the digital document DO.

In this way the signing procedure can be considered completed. Preferably the signed digital document DO is transmitted by the first mobile device 5 to a remote memory area (a physical storage space) by means of email/Registered email/etc.

According to a further aspect, a copy of the signed digital document DO is transmitted by the first mobile device 5 to all the remaining users who have applied their signatures.

According to a further aspect, step F) of transmitting first identification information of the first electronic device 5 from the first electronic device 5 to the remote processor 2 comprises a step of (also) transmitting a unique identification code of a software module resident in the first electronic device 5.

According to this aspect, preferably the step G) of verifying on the basis of the first identification information, by interrogating the database 3, the identity of the first user 4' also includes using the unique identification code as the identity verification information of the first user.

According to a further aspect, step F) of transmitting second identification information of the second electronic device 6 from the second electronic device 6 to the remote processor 2 comprises a step of (also) transmitting a unique identification code of a software module resident in the second electronic device 6.

According to this aspect, preferably the step M of verifying on the basis of the second identification information, by interrogating the database 2, the identity of the second user 4" also includes using the unique identification code as the check data of the identity verification of the second user. Advantageously, in this way, a verification is made that the request for signing originates, or is carried out via, a predetermined software module. In this way, the risk that any applications realised by third parties might take the place in the electronic devices 5, 6 of "original" software, and generate requests for digital signatures unbeknown to the users, is substantially prevented.

According to a further aspect, a system is defined for a digital signing of a digital document DO, designed to enable signing a document by a plurality of users, comprising:
- a remote processor 2 provided with a database 3 containing authentication information associated with users 4', 4" of the service, the database 3 comprising information regarding associations established between mobile electronic devices 5, 6 and users 4', 4" and identification information of the mobile electronic devices 5, 6 associated to the users;
- first operating instructions designed to be installed on the remote processor 2 to implement steps B, C, G, M of the method of the method described in the foregoing;
- second operating instructions designed to be installed at least on a first mobile electronic device 5 associated with a first user 4' and on a second mobile electronic device 6 associated with a second user 4" and configured to allow implementation of at least the steps F, H, L, N of the method described in the foregoing.

## Claims

1. A method for digitally signing, in a shared manner, a digital document (DO) by a plurality of users (4', 4"), comprising the following steps:
- A) preparing a remote processor (2) provided with a database (3) containing authentication information associated with users (4', 4") of the service;
- B) associating a first mobile electronic device (5) to a first user (4') by storing identification information of the first electronic device (5) in the database (3) and storing association information regarding an association between the first mobile electronic device (5) and the first user (4');
- C) associating a second mobile electronic device (6) to a second user (4") by storing identification information of the second electronic device (6) in the database (3) and storing association information regarding an association between the second mobile electronic device (6) and the second user (4");
- D) preparing a digital document (DO) which must be digitally signed and displaying the digital document (DO) in a display of the first mobile electronic device (5);
- E) starting a session for digitally signing the digital document (DO) comprising the following steps:
- F) electronically transmitting first identification information of the first electronic device (5) from the first electronic device (5) to the remote processor (2);
- G) checking the identity of the first user (4'), on the basis of the first identification information, by interrogating the database (3);
- H) electronically transmitting from the first mobile electronic device (5) to the second mobile electronic device (6) information designed to allow a display of the digital document (DO) on the second mobile electronic device (6);
- L) electronically transmitting second identification information of the second electronic device (6) from the second electronic device (6) to the remote processor (2);
- M) checking the identity of the second user (4"), on the basis of the second identification information, by interrogating the database (2);
- N) electronically sending, in the case of a positive outcome of the identity checks, a notification of signature by the second user (4") to the first electronic device (5) so as to complete the digital signature of the electronic document (DO) by the first and the second user (4', 4").

2. The method according to the preceding claim, further comprising, before the step H) of electronically transmitting from the first mobile electronic device (5) to the second mobile electronic device (6) information designed to allow a display of the digital document (DO) on the second mobile electronic device (6), a step of selecting the second user (4"), to which the second electronic device (6) corresponds, by using the first electronic device (5).

3. The method according to any one of the preceding claims, wherein the step D) of preparing a digital document (DO) to be digitally signed comprises a step capturing a photograph of a hard copy document using the first mobile electronic device (5), for electronically generating the above-mentioned digital document (DO).

4. The method according to claim 1 or 2, wherein the step D) of preparing a digital document (DO) to be digitally signed comprises a step of inserting, on a specially prepared data collection form, information of an alphanumeric and/or graphic nature.

5. The method according to any one of the preceding claims, wherein the step B) of associating a first mobile electronic device (5) to a first user (4') by storing identification information of the first electronic device (5) in the database (3) comprises a step of storing in the database (3) information regarding the IMEI code and/or the serial number of the first electronic device (5) and/or information regarding the MAC address of the network card of the first mobile electronic device (5) and wherein the step C) of associating a second mobile electronic device (6) with a second user (4") by storing identification information of the second electronic device (6) in the database (3) comprises a step of storing in the database (3) information regarding the IMEI code and/or serial number of the second electronic device (6) and/or information regarding the MAC address of the network card of the second mobile electronic device (6).

6. The method according to any one of the preceding claims, wherein the step E) of starting a session for digitally signing the digital document (DO) comprises a step of transmitting to the remote processor (2) check data designed to allow the checking of the identity of a software application present in the first and second mobile devices (5, 6) by the first electronic device (5) and by the second mobile electronic device (6) and a step of authenticating the check data, using the remote processor (2).

7. The method according to any one of the preceding claims, wherein the step F) of transmitting first identification information of the first electronic device (5) from the first electronic device (5) to the remote processor (2) comprises a step of transmitting the IMEI code and/or the serial number of the first electronic device (5) and/or a MAC address of the network card and/or information regarding the GPS position and/or information regarding a unique identification key of the first electronic device (5), that is, of the first user (4').

8. The method according to any one of the preceding claims, wherein the step F) of transmitting first identification information of the first electronic device (5) from the first electronic device (5) to the remote processor (2) comprises a step of transmitting a unique identification code of a software module resident in the first electronic device (5).

9. The method according to any one of the preceding claims, wherein the step of transmitting second identification information of the second electronic device (6) from the second electronic device (6) to the remote processor (2) comprises a step of transmitting the IMEI code and/or the serial number of the second electronic device (6) and/or a MAC address of the network card and/or information regarding the GPS position and/or information regarding a unique identification key of the second electronic device (6), that is, of the second user (4").

10. The method according to any one of the preceding claims, wherein the step F) of transmitting second identification information of the second electronic device (6) from the second electronic device (6) to the remote processor (2) comprises a step of transmitting a unique identification code of a software module resident in the second electronic device (6).

11. The method according to any one of the preceding claims, wherein the step L) of transmitting second identification information of the second electronic device (6) from the second electronic device (6) to the remote processor (2) comprises a step of transmitting the IMEI code of the second electronic device (6) and/or a MAC address of the network card and/or information regarding the GPS position and/or information regarding a unique identification key of the first electronic device (5).

12. The method according to any one of the preceding claims, wherein the first mobile device (5) and the second mobile device (6) are elements of the following group: mobile phones, tablet PCs, portable computers, handheld devices.

13. A system for digitally signing in a shared manner a digital document, designed to allow the signature of a same digital document (DO), in a shared manner, by a plurality of users (4', 4"), comprising:
- a remote processor (2) provided with a database (3) containing authentication information associated with users (4', 4") of the service, the database (3) comprising information regarding associations established between mobile electronic devices (5, 6) and users (4', 4") and identification information of the mobile electronic devices (5, 6);
- first operating instructions designed to be installed on the remote processor (2) to implement steps B, C, G, M of the method according to the preceding claims;
- second operating instructions designed to be installed at least on a first mobile electronic device (5) associated with a first user (4') and on a second mobile electronic device (6) associated with a second user (4") and configured to allow implementation of at least the steps F, H, L, N of the method according to any one of the preceding claims.

## Patentansprüche

1. Verfahren zur gemeinsamen digitalen Signierung eines digitalen Dokuments (DO) durch eine Vielzahl an Benutzern (4', 4") umfassend die folgenden Schritten:
- A) Vorbereiten eines entfernten Prozessors (2), der mit einer Datenbank (3) versehen ist, die Authentifizierungsinformationen enthält, die mit den Benutzern (4', 4") des Dienstes assoziiert sind;
B) Assoziieren eines ersten elektronischen Mobilgeräts (5) mit einem ersten Benutzer (4') durch Speichern von Identifikationsinformationen des ersten elektronischen Geräts (5) in der Datenbank (3) und Speichern von Assoziierungsinformationen bezüglich einer Assoziierung zwischen dem ersten elektronischen Mobilgerät (5) und dem ersten Benutzer (4');
C) Assoziieren eines zweiten elektronischen Mobilgeräts (6) mit einem zweiten Benutzer (4") durch Speichern von Identifikationsinformationen des zweiten elektronischen Geräts (6) in der Datenbank (3) und Speichern von Assoziierungsinformationen bezüglich einer Assoziierung zwischen dem zweiten elektronischen Mobilgerät (6) und dem zweiten Benutzer (4");
D) Erstellen eines digitalen Dokuments (DO), das digital signiert werden muss, und Anzeigen des digitalen Dokuments (DO) in einer Anzeige des ersten elektronischen Mobilgeräts (5);
E) Starten einer Sitzung zur digitalen Signierung des digitalen Dokuments (DO) umfassend die folgenden Schritten:
F) elektronisches Übertragen erster Identifikationsinformationen des ersten elektronischen Geräts (5) vom ersten elektronischen Gerät (5) zum entfernten Prozessor (2);
G) Überprüfen der Identität des ersten Benutzers (4') auf der Basis der ersten Identifikationsinformationen durch Abfragen der Datenbank (3);
H) elektronisches Übertragen von Informationen vom ersten elektronischen Mobilgerät (5) zum zweiten elektronischen Mobilgerät (6), die ausgelegt sind, um eine Anzeige des digitalen Dokuments (DO) auf dem zweiten elektronischen Mobilgerät (6) zu ermöglichen;
L) elektronisches Übertragen zweiter Identifikationsinformationen des zweiten elektronischen Geräts (6) vom zweiten elektronischen Gerät (6) zum entfernten Prozessor (2);
M) Überprüfen der Identität des zweiten Benutzers (4") auf der Basis der zweiten Identifikationsinformationen durch Abfragen der Datenbank (2);
N) elektronisches Senden einer Signaturbenachrichtigung durch den zweiten Benutzer (4") an das erste elektronische Gerät (5) im Falle eines positiven Ergebnisses der Identitätsprüfung, um die digitale Signatur des elektronischen Dokuments (DO) durch den ersten und den zweiten Benutzer (4', 4") zu vervollständigen.

2. Verfahren nach dem vorhergehenden Anspruch, das zudem vor dem Schritt H) zum elektronischen Übertragen von Informationen vom ersten elektronischen Mobilgerät (5) zum zweiten elektronischen Mobilgerät (6), die ausgelegt sind, um eine Anzeige des digitalen Dokuments (DO) auf dem zweiten elektronischen Mobilgerät (6) zu ermöglichen, ein Schritt zum Auswählen des zweiten Benutzers (4"), dem das zweite elektronische Gerät (6) entspricht, unter Verwendung des ersten elektronischen Geräts (5) umfasst.

3. Verfahren nach einem der vorhergehenden Ansprüche, wobei der Schritt D) zum Vorbereiten eines digital zu signierenden digitalen Dokuments (DO) einen Schritt zum Erfassen eines Bildes eines gedruckten Dokuments unter Verwendung des ersten elektronischen Mobilgeräts (5) umfasst, um das oben genannte digitale Dokument (DO) elektronisch zu erzeugen.

4. Verfahren nach Anspruch 1 oder 2, wobei der Schritt D) zum Vorbereiten eines digital zu signierenden digitalen Dokuments (DO) einen Schritt zum Einfügen von Informationen alphanumerischer und/oder grafischer Natur in ein speziell vorbereitetes Datenerhebungsformular umfasst.

5. Verfahren nach einem der vorhergehenden Ansprüche, wobei der Schritt B) zum Assoziieren eines ersten elektronischen Mobilgeräts (5) zu einem ersten Benutzer (4') durch Speichern von Identifikationsinformationen des ersten elektronischen Geräts (5) in der Datenbank (3) einen Schritt zum Speichern von Informationen bezüglich des IMEI-Codes und/oder der Seriennummer des ersten elektronischen Geräts (5) und/oder von Informationen bezüglich der MAC-Adresse der Netzwerkkarte des ersten elektronischen Mobilgeräts (5) in der Datenbank (3) umfasst und wobei der Schritt C) zum Assoziieren eines zweiten elektronischen Mobilgeräts (6) mit einem zweiten Benutzer (4") durch Speichern von Identifikationsinformationen des zweiten elektronischen Geräts (6) in der Datenbank (3) einen Schritt zum Speichern von Informationen bezüglich des IMEI-Codes und/oder Seriennummer des zweiten elektronischen Geräts (6) und/oder Informationen bezüglich der MAC-Adresse der Netzwerkkarte des zweiten elektronischen Mobilgeräts (6) in der Datenbank (3) umfasst.

6. Verfahren nach einem der vorhergehenden Ansprüche, wobei der Schritt E) zum Starten einer Sitzung zum digitalen Signieren des digitalen Dokuments (DO) einen Schritt zum Übertragen von Prüfdaten zum entfernten Prozessor (2) umfasst, die ausgelegt sind, um das Prüfen der Identität einer im ersten und zweiten Mobilgerät (5, 6) vorhandenen Softwareanwendung durch das erste elektronische Gerät (5) und durch das zweite elektronische Mobilgerät (6) zu ermöglichen und einen Schritt zum Authentifizieren der Prüfdaten unter Verwendung des entfernten Prozessors (2) umfasst.

7. Verfahren nach einem der vorhergehenden Ansprüche, wobei der Schritt F) zum Übertragen erster Identifikationsinformation des ersten elektronischen Geräts (5) vom ersten elektronischen Gerät (5) zum entfernten Prozessor (2) einen Schritt zum Übertragen des IMEI-Codes und/oder der Seriennummer des ersten elektronischen Geräts (5) und/oder einer MAC-Adresse der Netzwerkkarte und/oder Informationen bezüglich der GPS-Position und/oder Informationen bezüglich eines eindeutigen Identifikationsschlüssels des ersten elektronischen Geräts (5), d.h. des ersten Benutzers (4'), umfasst.

8. Verfahren nach einem der vorhergehenden Ansprüche, wobei der Schritt F) zum Übertragen erster Identifikationsinformationen des ersten elektronischen Geräts (5) vom ersten elektronischen Gerät (5) zum entfernten Prozessor (2) einen Schritt zum Übertragen eines eindeutigen Identifikationscodes eines im ersten elektronischen Gerät (5) befindlichen Softwaremoduls umfasst.

9. Verfahren nach einem der vorhergehenden Ansprüche, wobei der Schritt zum Übertragen zweiter Identifikationsinformationen des zweiten elektronischen Geräts (6) vom zweiten elektronischen Gerät (6) zum entfernten Prozessor (2) einen Schritt zum Übertragen des IMEI-Codes und/oder der Seriennummer des zweiten elektronischen Geräts (6) und/oder einer MAC-Adresse der Netzwerkkarte und/oder Informationen bezüglich der GPS-Position und/oder Informationen bezüglich eines eindeutigen Identifikationsschlüssels des zweiten elektronischen Geräts (6), d.h., des zweiten Benutzers (4"), umfasst.

10. Verfahren nach einem der vorhergehenden Ansprüche, wobei der Schritt F) zum Übertragen zweiter Identifikationsinformationen des zweiten elektronischen Geräts (6) vom zweiten elektronischen Gerät (6) zum entfernten Prozessor (2) einen Schritt zum Übertragen eines eindeutigen Identifikationscodes eines im zweiten elektronischen Gerät (6) befindlichen Softwaremoduls umfasst.

11. Verfahren nach einem der vorhergehenden Ansprüche, wobei der Schritt L) zum Übertragen zweiter Identifikationsinformationen des zweiten elektronischen Geräts (6) vom zweiten elektronischen Gerät (6) zum entfernten Prozessor (2) einen Schritt zum Übertragen des IMEI-Codes des zweiten elektronischen Geräts (6) und/oder einer MAC-Adresse der Netzwerkkarte und/oder Informationen bezüglich der GPS-Position und/oder Informationen bezüglich eines eindeutigen Identifikationsschlüssels des ersten elektronischen Geräts (5) umfasst.

12. Verfahren nach einem der vorhergehenden Ansprüche, wobei das erste Mobilgerät (5) und das zweite Mobilgerät (6) Elemente der folgenden Gruppe sind: Mobiltelefone, Tablet-PCs, tragbare Computer, Handheld-Geräte.

13. System zur gemeinsamen digitalen Signierung eines digitalen Dokuments, das so ausgelegt ist, dass es die gemeinsame Signatur desselben digitalen Dokuments (DO) durch eine Vielzahl an Benutzern (4', 4") ermöglicht, umfassend:
- einen entfernten Prozessor (2), der mit einer Datenbank (3) versehen ist, die Authentifizierungsinformationen enthält, die mit den Benutzern (4', 4") des Dienstes assoziiert sind, wobei die Datenbank (3) Informationen bezüglich zwischen elektronischen Mobilgeräten (5, 6), Benutzern (4', 4") und Identifikationsinformationen der elektronischen Mobilgeräte (5, 6) hergestellte Assoziierungen umfasst;
- erste Betriebsanweisungen, die ausgelegt sind, um auf dem entfernten Prozessor (2) installiert zu werden, um die Schritte B, C, G, M des Verfahrens nach den vorhergehenden Ansprüchen auszuführen;
- zweite Betriebsanweisungen, die ausgelegt sind, um zumindest auf einem ersten elektronischen Mobilgerät (5), das mit einem ersten Benutzer (4') assoziiert ist, und auf einem zweiten elektronischen Mobilgerät (6), das mit einem zweiten Benutzer (4") assoziiert ist, installiert zu werden und konfiguriert, um Durchführung zumindest der Schritte F, H, L, N des Verfahrens nach einem der vorhergehenden Ansprüche zu ermöglichen.

## Revendications

1. Procédé de signature numérique, de façon partagée, d'un document numérique (DO) par une pluralité d'utilisateurs (4', 4"), comprenant les étapes suivantes :
- A) préparer un processeur (2) à distance pourvu d'une base de données (3) contenant des informations d'authentification associées aux utilisateurs (4', 4") du service ;
B) associer un premier dispositif électronique (5) mobile à un premier utilisateur (4') en stockant les informations d'identification du premier dispositif électronique (5) dans la base de données (3) et en stockant les informations d'association concernant une association entre le premier dispositif électronique (5) mobile et le premier utilisateur (4') ;
C) associer un second dispositif électronique (6) mobile à un second utilisateur (4") en stockant les informations d'identification du second dispositif électronique (6) dans la base de données (3) et en stockant les informations d'association concernant une association entre le second dispositif électronique (6) mobile et le second utilisateur (4") ;
D) préparer un document numérique (DO) devant être signé de façon numérique et afficher le document numérique (DO) sur un écran du premier dispositif électronique (5) mobile ;
E) débuter une session, destinée à signer de façon numérique le document numérique (DO), comprenant les étapes suivantes :
F) transmettre électroniquement les premières informations d'identification du premier dispositif électronique (5), du premier dispositif électronique (5) au processeur (2) à distance ;
G) vérifier l'identité du premier utilisateur (4'), sur la base des premières informations d'identification, en interrogeant la base de données (3) ;
H) transmettre électroniquement du premier dispositif électronique (5) mobile au second dispositif électronique (6) mobile des informations conçues pour permettre un affichage du document numérique (DO) sur le second dispositif électronique (6) mobile ;
L) transmettre électroniquement les secondes informations d'identification du second dispositif électronique (6), du second dispositif électronique (6) au processeur (2) à distance ;
M) vérifier l'identité du second utilisateur (4"), sur la base des secondes informations d'identification, en interrogeant la base de données (2) ;
N) envoyer électroniquement, en cas de résultat positif des vérifications d'identité, une notification de signature par le second utilisateur (4") au premier dispositif électronique (5) de sorte à finaliser la signature numérique du document électronique (DO) par le premier et le second utilisateur (4', 4").

2. Procédé selon la revendication précédente, comprenant de plus, avant l'étape H), consistant à transmettre électroniquement du premier dispositif électronique (5) mobile au second dispositif électronique (6) mobile des informations conçues pour permettre un affichage du document numérique (DO) sur le second dispositif électronique (6) mobile, une étape consistant à sélectionner le second utilisateur (4") auquel le second dispositif électronique (6) correspond, en utilisant le premier dispositif électronique (5).

3. Procédé selon l'une quelconque des revendications précédentes, dans lequel l'étape D), consistant à préparer un document numérique (DO) pour être signé de façon numérique, comprend une étape consistant à capturer une photographie d'un document papier en utilisant le premier dispositif électronique (5) mobile pour générer électroniquement le document numérique (DO) susmentionné.

4. Procédé selon la revendication 1 ou 2, dans lequel l'étape D), consistant à préparer un document numérique (DO) à signer de façon numérique, comprend une étape consistant à insérer, sur un formulaire de collecte de données spécialement préparé, des informations de nature alphanumérique et/ou graphique.

5. Procédé selon l'une quelconque des revendications précédentes, dans lequel l'étape B), consistant à associer un premier dispositif électronique (5) mobile à un premier utilisateur (4') en stockant des informations d'identification du premier dispositif électronique (5) dans la base de données (3), comprend une étape consistant à stocker dans la base de données (3) des informations concernant le code IIEM et/ou le numéro de série du premier dispositif électronique (5) et/ou des informations concernant l'adresse CAM de la carte réseau du premier dispositif électronique (5) mobile et dans lequel l'étape C), consistant à associer un second dispositif électronique (6) mobile à un second utilisateur (4") en stockant des informations d'identification du second dispositif électronique (6) dans la base de données (3), comprend une étape consistant à stocker dans la base de données (3) des informations concernant le code IIEM et/ou le numéro de série du second dispositif électronique (6) et/ou des informations concernant l'adresse CAM de la carte réseau du second dispositif électronique (6) mobile.

6. Procédé selon l'une quelconque des revendications précédentes, dans lequel l'étape E), consistant à débuter une session destinée à signer de façon numérique le document numérique (DO), comprend une étape consistant à transmettre au processeur (2) à distance des données de vérification conçues pour permettre la vérification de l'identité d'une application logicielle présente dans les premier et second dispositifs mobiles (5, 6) par le premier dispositif électronique (5) et par le second dispositif électronique (6) mobile et une étape consistant à authentifier les données de vérification, en utilisant le processeur (2) à distance.

7. Procédé selon l'une quelconque des revendications précédentes, dans lequel l'étape F), consistant à transmettre les premières informations d'identification du premier dispositif électronique (5) du premier dispositif électronique (5) au processeur (2) à distance, comprend une étape consistant à transmettre le code IIEM et/ou le numéro de série du premier dispositif électronique (5) et/ou une adresse CAM de la carte réseau et/ou des informations concernant la position GPS et/ou des informations concernant une clé d'identification unique du premier dispositif électronique (5), c'est-à-dire, du premier utilisateur (4').

8. Procédé selon l'une quelconque des revendications précédentes, dans lequel l'étape F), consistant à transmettre les premières informations d'identification du premier dispositif électronique (5), du premier dispositif électronique (5) au processeur (2) à distance, comprend une étape consistant à transmettre un code d'identification unique d'un module logiciel résidant dans le premier dispositif électronique (5).

9. Procédé selon l'une quelconque des revendications précédentes, dans lequel l'étape consistant à transmettre les secondes informations d'identification du second dispositif électronique (6), du second dispositif électronique (6) au processeur (2) à distance, comprend une étape consistant à transmettre le code IIEM et/ou le numéro de série du second dispositif électronique (6) et/ou une adresse CAM de la carte réseau et/ou des informations concernant la position GPS et/ou des informations concernant une clé d'identification unique du second dispositif électronique (6), c'est-à-dire, du second utilisateur (4") .

10. Procédé selon l'une quelconque des revendications précédentes, dans lequel l'étape F), consistant à transmettre les secondes informations d'identification du second dispositif électronique (6), du second dispositif électronique (6) au processeur (2) à distance, comprend une étape consistant à transmettre un code d'identification unique d'un module logiciel résidant dans le second dispositif électronique (6).

11. Procédé selon l'une quelconque des revendications précédentes, dans lequel l'étape L), consistant à transmettre les secondes informations d'identification du second dispositif électronique (6), du second dispositif électronique (6) au processeur (2) à distance, comprend une étape consistant à transmettre le code IIEM du second dispositif électronique (6) et/ou une adresse CAM de la carte réseau et/ou des informations concernant la position GPS et/ou des informations concernant une clé d'identification unique du premier dispositif électronique (5).

12. Procédé selon l'une quelconque des revendications précédentes, dans lequel le premier dispositif mobile (5) et le second dispositif mobile (6) sont des éléments du groupe suivant : téléphones mobiles, tablettes PC, ordinateurs portables, terminaux mobiles.

13. Système destiné à signer de façon numérique de manière partagée un document numérique, conçu pour permettre la signature d'un même document numérique (DO), de façon partagée, par une pluralité d'utilisateurs (4', 4"), comprenant :
- un processeur (2) à distance pourvu d'une base de données (3) contenant des informations d'authentification associées à des utilisateurs (4', 4") du service, la base de données (3) comprenant des informations concernant des associations établies entre des dispositifs électroniques (5, 6) mobiles et des utilisateurs (4', 4") et des informations d'identification des dispositifs électroniques (5, 6) mobiles ;
- des premières instructions de fonctionnement conçues pour être installées sur le processeur (2) à distance pour mettre en œuvre les étapes B, C, G, M du procédé selon les revendications précédentes ;
- des secondes instructions de fonctionnement conçues pour être installées au moins sur un premier dispositif électronique (5) mobile associé à un premier utilisateur (4') et sur un second dispositif électronique (6) mobile associé à un second utilisateur (4") et configurées pour permettre au moins la mise en œuvre des étapes F, H, L, N du procédé selon l'une quelconque des revendications précédentes.
